# EUROPÄISCHE PATENTSCHRIFT

(11) **EP 2 474 765 B1**
(45) Veröffentlichungstag und Bekanntmachung des Hinweises auf die Patenterteilung: **30.04.2014**
(21) Anmeldenummer: 11150634.1
(22) Anmeldetag: 11.01.2011
(51) Int. Cl.: F16B 2/24, F16B 15/00, F24D 3/14, F16L 3/04, F16B 21/08

(54) **Rohrhalter zur Befestigung eines Heizrohres und/oder Kühlrohres und Heiz- und/oder Kühlanordnung**
Tube holder for fixing a heating pipe and/or cooling pipe and heating and/or cooling assembly
Support de tuyau destiné à la fixation d'un tuyau de chauffage et/ou d'un tuyau de refroidissement et agencement de chauffage et/ou de refroidissement

(43) Veröffentlichungstag der Anmeldung: 11.07.2012
(73) Patentinhaber: Roth Werke GmbH, 35232 Dautphetal (DE)
(72) Erfinder:
(74) Vertreter: Rohmann, Michael

(56) Entgegenhaltungen:
- EP-A1- 1 855 062
- CH-A5- 645 447
- DE-A1- 3 907 271
- DE-A1- 19 607 516
- DE-A1- 19 634 532
- DE-A1- 19 756 764
- DE-C1- 3 536 438
- US-A- 4 094 483
- US-A- 5 393 185

## Beschreibung

Die Erfindung betrifft einen Rohrhalter zur Befestigung eines Heizrohres und/oder eines Kühlrohres auf einer Dämmschicht, wobei der Rohrhalter U-förmig bzw. im Wesentlichen U-förmig ausgebildet ist und eine U-Basis sowie zwei daran angeschlossene U-Schenkel aufweist, wobei an jeden U-Schenkel zumindest ein Widerhaken für die Verankerung des Rohrhalters in einer Dämmschicht angeschlossen ist. - Die -Erfindung betrifft fernerhin eine Heiz- und/oder Kühlanordnung mit einer Dämmschicht, zumindest einem auf der Dämmschicht verlegten Rohr und mit Rohrhaltern, mit denen das Rohr an der Dämmschicht fixiert ist.

Die Dämmschicht weist in der Regel eine Unterschicht und eine darauf angeordnete dünne Auflageschicht auf. U-förmige Rohrhalter werden insbesondere bei der Verlegung von Heizrohren für Fußbodenheizungen in größeren Stückzahlen eingesetzt, um die Heizrohre auf der Dämmschicht zu befestigen. Die Rohrhalter werden normalerweise mit Setzvorrichtungen, die auf das zu verlegende Heizrohr aufgesetzt werden, in die Dämmschicht eingestoßen. Nach dem Befestigen der Heizrohre auf der Dämmschicht wird eine Vergussmasse, insbesondere eine Estrichschicht aufgebracht und die Heizrohre werden in die Vergussmasse bzw. in den Estrich eingebettet.

Rohrhalter der eingangs beschriebenen Art, siehe z.B. das Dokument DE 3536438, sind aus der Praxis in verschiedenen Ausführungsformen bekannt. Bei vielen bekannten Rohrhaltern wird das Rohr bzw. das Heizrohr unmittelbar auf der Dämmschicht, d. h. in Berührungskontakt mit der Dämmschicht, befestigt. Bei dieser Art der Befestigung findet aber eine ausreichende Übertragung der Heizwärme auf den Estrich nicht statt und somit resultieren Wärmeverluste. Das wird noch dadurch begünstigt, dass bei direkter Auflage des Heizrohres auf der Dämmschicht eine voll umfängliche bzw. radiale Einbettung des Heizrohres in der Estrichschicht nicht gewährleistet werden kann und Zwischenräume oder Lücken zwischen Heizrohr und Dämmschicht von dem Estrich nicht ausgefüllt werden und somit Räume entstehen können, die einer wirksamen Wärmeübertragung ebenfalls im Wege stehen. - Bei vielen bekannten Rohrhaltern können die Rohre zudem nicht ausreichend exakt und funktionssicher positioniert und geführt werden. - Außerdem sind die meisten der bekannten Rohrhalter lediglich für Rohre mit einem bestimmten Außendurchmesser einsetzbar. Dadurch müssen in unerwünschter und aufwendiger Weise eine Mehrzahl von Rohrhaltern für verschiedene Außendurchmesser der Rohre vorgehalten werden.

Demgegenüber liegt der Erfindung das technische Problem zugrunde, Rohrhalter anzugeben, bei denen die vorstehend aufgezeigten Nachteile vermieden werden können. Insbesondere soll eine effektive und verbesserte Wärmeübertragung mit diesen Rohrhaltern erzielt werden und mit den Rohrhaltern soll eine sehr exakte und funktionssichere Positionierung der Rohre möglich sein. Der Erfindung liegt weiterhin das technische Problem zugrunde, eine entsprechende Heiz- und/oder Kühlanordnung anzugeben.

Zur Lösung des technischen Problems lehrt die Erfindung einen Rohrhalter mit den Merkmalen des Anspruchs 1.

Es liegt im Rahmen der Erfindung, dass die erfindungsgemäßen Rohrhalter aus Kunststoff bzw. im Wesentlichen aus Kunststoff bestehen und vorzugsweise als Spritzgussteile gefertigt werden. Es liegt weiterhin im Rahmen der Erfindung, dass die Widerhaken einstückig mit den U-Schenkeln ausgebildet sind bzw. einstückig an die U-Schenkel angeformt sind. Innenseite eines U-Schenkels meint im Übrigen die dem zweiten U-Schenkel des Rohrhalters zugewandte Seite des U-Schenkels.

Die erfindungsgemäßen Rohrauflageelemente dienen zum einen der Auflage bzw. Aufnahme eines Rohres. Es liegt dabei im Rahmen der Erfindung, dass das Rohr auf der Oberseite der Rohrauflageelemente aufliegt und somit von den Rohrauflageelementen gleichsam von unten abgestützt wird. Oberseite bezieht sich dabei auf den montierten bzw. befestigten Zustand der Rohrhalter. Erfindungsgemäß sind lediglich zwei Rohrauflageelemente vorgesehen und zwar an jedem U-Schenkel ein Rohrauflageelement. - Die erfindungsgemäßen Rohrauflageelemente stützen sich zum anderen auf der Dämmschicht ab bzw. dienen der Abstützung des Rohres auf der Dämmschicht. Empfohlenermaßen liegen dabei die Abstützelemente unmittelbar und insbesondere ohne Zwischenschaltung weiterer Rohrhalterkomponenten auf der Dämmschicht auf. Dann erfolgt also eine unmittelbare Abstützung durch die Abstützelemente auf der Dämmschicht.

Die erfindungsgemäßen Rohrhalter werden zweckmäßigerweise mit einer Setzvorrichtung an der Dämmschicht befestigt bzw. in die Dämmschicht eingestoßen. Derartige Setzvorrichtungen sind an sich bekannt. Vorzugsweise weisen die Rohrhalter Manipulationselemente auf, an denen die Setzvorrichtung zum Einbringen der Rohrhalter in die Dämmschicht angreifen kann. Zweckmäßigerweise sind die Manipulationselemente an den Außenseiten der U-Schenkel angeschlossen bzw. einstückig angeformt.

Die Dämmschicht besteht vorzugsweise aus einer Unterschicht und aus einer auf der Unterschicht aufliegenden Auflageschicht bzw. dünnen Auflageschicht. Dabei kann die Auflageschicht in Form einer Folie ausgebildet sein oder nach einer weiter unten noch beschriebenen bevorzugten Ausführungsform als Vliesstoff bzw. Vliesstofflage. Beim Einbringen eines Rohrhalters in die Dämmschicht werden die an die U-Schenkel angeschlossenen Widerhaken in die Dämmschicht eingedrückt und vorzugsweise hintergreifen die Widerhaken im befestigten Zustand eines Rohrhalters die Auflageschicht.

Es liegt im Rahmen der Erfindung, dass die Rohrauflageelemente einstückig mit den U-Schenkeln ausgebildet sind bzw. einstückig an die U-Schenkel angeformt sind. Es liegt dabei fernerhin im Rahmen der Erfindung, dass die Rohrauflageelemente jeweils mit ihrem oberen Ende an den zugeordneten U-Schenkel bzw. an die Innenseite des zugeordneten U-Schenkels angeschlossen sind. Die Rohrauflageelemente ragen mit ihrem unteren Ende im nicht abgestützten Zustand frei in den Zwischenraum zwischen den U-Schenkeln. Oberes und unteres Ende bezieht sich hier auf den befestigten bzw. montierten Zustand der Rohrhalter, wobei das untere Ende der Dämmschicht zugewandt ist. Dass die Rohrauflageelemente frei in den genannten Zwischenraum ragen, meint, dass die Rohrauflageelemente mit ihrem unteren Ende bzw. mit ihrem unteren Bereich nicht an eine andere Komponente des Rohrhalters und insbesondere nicht an den zugeordneten U-Schenkel angeschlossen sind. Gemäß der Ausführungsform der Erfindung sind die Rohrauflageelemente lediglich bzw. ausschließlich mit ihrem oberen Ende an die Innenseite des zugeordneten U-Schenkels angeschlossen. Es empfiehlt sich, dass die Rohrauflageelemente im Übergangsbereich zwischen U-Basis und U-Schenkeln an die Innenseite der U-Schenkel angeschlossen sind. Nach einer Ausführungsvariante sind die Rohrauflageelemente unterhalb bzw. unmittelbar unterhalb der vorzugsweise bogenförmigen U-Basis an die Innenseite der U-Schenkel angeschlossen.

Es liegt im Rahmen der Erfindung, dass die Rohrauflageelemente als Rastelemente zum Einrasten bzw. Verrasten eines Rohres zwischen der U-Basis und den Rohrauflageelementen ausgebildet sind. Es liegt fernerhin im Rahmen der Erfindung, dass die Rohrauflageelemente als elastische bzw. federbewegliche Rastelemente ausgeführt sind. Beim Befestigen eines Rohres mittels eines Rohrhalters an der Dämmschicht wird der Rohrhalter - vorzugsweise mit Hilfe einer Setzvorrichtung - über das Rohr gesetzt, so dass das Rohr zwischen den beiden U-Schenkeln des Rohrhalters aufgenommen wird. Zweckmäßigerweise werden beim weiteren Einbringen des Rohrhalters die als Rastelemente ausgebildeten Rohrauflageelemente durch das sie passierende Rohr zu den Innenseiten der U-Schenkel hingedrückt. Empfohlenermaßen bewegen sich die Rohrauflageelemente bzw. Rastelemente nach Passieren des Rohrs wieder in Richtung auf den gegenüberliegenden U-Schenkel zu und kehren bevorzugt in ihren Ausgangszustand bzw. im Wesentlichen in ihren Ausgangszustand zurück. Nach einer besonders bevorzugten Ausführungsvariante weisen die U-Schenkel an ihren Innenseiten Ausweichausnehmungen für die Rastelemente beim Verrasten eines Rohres auf. Beim Passieren eines Rohres im Zuge der Befestigung eines Rohrhalters werden die Rohrauflageelemente bzw. Rastelemente dann in Richtung bzw. in die Ausweichausnehmungen gedrückt.

Die Rohrauflageelemente weisen an ihren unteren Enden jeweils einen Abstützfuß zur flächigen Abstützung auf der Dämmschicht auf. Nach einer Ausführungsvariante bildet ein gegenüber dem übrigen Rohrauflageelement dünnerer bzw. dünnwandigerer Endbereich einen solchen Abstützfuß.

Eine empfohlene Ausführungsform der Erfindung ist dadurch gekennzeichnet, dass die Rohrauflageelemente bzw. Rastelemente einen Rohrauflageabschnitt für die Auflage eines Rohres aufweisen sowie einen dazu abgewinkelt angeordneten Abstützabschnitt für die Abstützung auf der Dämmschicht aufweisen. Vorzugsweise ist der Rohrauflageabschnitt mit seinem oberen Ende an dem zugeordneten U-Schenkel bzw. an die Innenseite des zugeordneten U-Schenkels angeschlossen. Empfohlenermaßen beträgt der Winkel α zwischen dem Rohrauflageabschnitt und dem zugeordneten U-Schenkel 20 bis 50°, bevorzugt 25 bis 45° und sehr bevorzugt 30 bis 40°. Zweckmäßigerweise beträgt der Winkel β zwischen dem Rohrauflageabschnitt und dem daran angeschlossenen Abstützabschnitt 90 bis 150°, bevorzugt 100 bis 140° und sehr bevorzugt 115 bis 135°. Es liegt im Rahmen der Erfindung, dass das Rohrauflageelement lediglich aus dem Rohrauflageabschnitt und dem dazu abgewinkelt angeordneten Abstützabschnitt besteht. Gemäß bevorzugter Ausführungsform entspricht die Breite der Rohrauflageelemente der Breite der U-Schenkel bzw. im Wesentlichen der Breite der U-Schenkel. Breite bezieht sich dabei auf die Erstreckung in Rohrlängsrichtung.

Vorzugsweise beträgt die Länge I der Projektion eines Rohrauflageelementes auf die Innenseite des zugeordneten U-Schenkels zumindest 25 %, bevorzugt zumindest 30 % und sehr bevorzugt zumindest 35 % der Länge L dieses U-Schenkels. Zweckmäßigerweise beträgt die Länge I der Projektion eines Rohrauflageelementes auf die Innenseite des zugeordneten U-Schenkels maximal 70 %, bevorzugt maximal 55 % und sehr bevorzugt maximal 50 % der Länge L dieses U-Schenkels. Die Länge L des U-Schenkels wird dabei von dem unteren Ende des U-Schenkels bis zum Beginn der U-Basis bzw. der bogenförmigen U-Basis gemessen.

Eine besonders bevorzugte Ausführungsform ist dadurch gekennzeichnet, dass an den an den U-Schenkeln angeschlossenen Widerhaken jeweils zumindest eine Schneidkante vorgesehen ist. Es liegt dabei im Rahmen der Erfindung, dass die Schneidkante aus der Widerhakenfläche des zugeordneten Widerhakens hervorsteht. Es liegt weiterhin im Rahmen der Erfindung, dass insbesondere die unteren bzw. zuerst in die Dämmschicht einzustoßenden Widerhaken jeweils zumindest die genannte Schneidkante aufweisen. Die Schneidkante dient zum Einschneiden des Widerhakens in die Dämmschicht im Zuge des Einbringens des Rohrhalters in die Dämmschicht. Vorzugsweise ist eine solche Schneidkante zumindest in der unteren Hälfte des zugeordneten Widerhakens vorhanden. Empfohlenermaßen ist die Schneidkante mittig an der dämmschichtseitigen Außenfläche des Widerhakens angeordnet. Zweckmäßigerweise weist ein Widerhaken zwei abgewinkelt zueinander angeordnete Widerhakenelemente auf. Es liegt im Rahmen der Erfindung, dass jedes Widerhakenelement des Widerhakens eine Schneidkante aufweist. Bevorzugt ist eine solche Schneidkante zumindest in der unteren Hälfte des zugeordneten Widerhakenelements vorhanden. Es empfiehlt sich, dass die Schneidkante mittig an der dämmschichtseitigen Außenfläche eines Widerhakenelementes angeordnete ist. - Durch das Vorsehen einer Schneidkante wird ein Widerhaken des erfindungsgemäßen Rohrhalters im Übrigen zusätzlich stabilisiert, so dass in vorteilhafter Weise die Auszugskräfte für den Rohrhalter erhöht werden. Aufgrund dieser Stabilisierung der Widerhaken können die Widerhaken gegenüber bekannten Widerhaken dünner bzw. schmaler ausgebildet werden, so dass im Vergleich zu bislang bekannten Rohrhaltern die Dämmschicht bzw. Auflageschicht beim Eindringen der Widerhaken weniger beeinträchtigt bzw. zerstört wird.

Zweckmäßigerweise ist an dem unteren Ende eines U-Schenkels an der Vorderseite des U-Schenkels und/oder an der Rückseite des U-Schenkels zumindest eine Schneidkante angeschlossen. Diese Schneidkante bzw. diese Schneidkanten sind vorzugsweise einstückig an den zugeordneten U-Schenkel angeformt. Auch dadurch wird ein verbessertes Durchdringen der Dämmschicht mit den Enden des Rohrhalters erreicht.

Nach empfohlener Ausführungsform ist ein erfindungsgemäßer Rohrhalter für die Aufnahme bzw. Auflage von Rohren mit einem Außendurchmesser von 10 bis 25 mm, vorzugsweise mit einem Außendurchmesser von 14 bis 20 mm eingerichtet bzw. ausgelegt. Von dem erfindungsgemäßen Rohrhalter können beispielsweise funktionssicher Rohre mit einem Außendurchmesser von 17 mm aufgenommen werden. Insbesondere aufgrund der erfindungsgemäßen Ausgestaltung mit den Rohrauflageelementen bzw. durch die erfindungsgemäße Ausgestaltung der Rohrauflageelemente wird in vorteilhafter Weise erreicht, dass von dem erfindungsgemäßen Rohrhalter Rohre mit unterschiedlichen Außendurchmessern aufgenommen werden können.

Zur Lösung des technischen Problems lehrt die Erfindung auch eine Heiz- und/oder Kühlanordnung mit einer Dämmschicht, mit zumindest einem auf der Dämmschicht verlegten Rohr und mit erfindungsgemäßen Rohrhaltern, mit denen das Rohr an der Dämmschicht fixiert ist und wobei die Dämmschicht zumindest eine Auflageschicht aus einem elastischen Vliesstoff aufweist. Empfohlenermaßen weist die Dämmschicht eine Unterschicht und die darauf angeordnete Auflageschicht aus dem elastischen Vliesstoff auf. Die Auflageschicht bildet dabei also die obere Abdeckung der Unterschicht.

Gemäß besonders empfohlener Ausführungsform ist der die Auflageschicht bildende Vliesstoff mit der Maßgabe elastisch ausgebildet, dass er sich nach dem Eindringen der Widerhaken eines Rohrhalters im Zuge der Befestigung des Rohres mit den Rohrhaltern im Bereich der Einstichöffnungen wieder zusammenzieht, so dass die Einstichöffnungen teilweise wieder verschlossen werden. Die Widerhaken durchdringen also zunächst die Auflageschicht unter Ausbildung größerer Einstichöffnungen und nach Passieren der Widerhaken zieht sich der elastische Vliesstoff unter Einwirkung elastischer Rückstellkräfte zusammen, so dass die Einstichöffnungen teilweise wieder verschlossen werden. Teilweise verschließen meint dabei vorzugsweise, dass der Vliesstoff nach dem Zusammenziehen zumindest teilweise oberhalb der Widerhaken an dem U-Schenkeln anliegt. Die in die Dämmschicht bzw. in die Unterschicht eingebrachten Widerhaken hintergreifen den Vliesstoff und sichern so den Rohrhalter vor dem Herausziehen. Zweckmäßigerweise ist der die Auflageschicht bildende Vliesstoff mit einer dünnen Polymerschicht oder mit einer dünnen Lackschicht versiegelt. - Mit der Auflageschicht aus einem elastischen Vliesstoff werden in vorteilhafter Weise Öffnungen vermieden, durch die Estrich in die Dämmschicht eindringen könnte. Auf diese Weise kann auch die Ausbildung von unerwünschten Schallbrücken verhindert werden. - Durch die Kombination der erfindungsgemäßen Rohrhalter mit der Dämmschicht mit einem Vliesstoff als Auflageschicht sowie der den Vliesstoff hintergreifenden Widerhaken und den sich auf der Dämmschicht abstützenden Rohrauflageelemente wird eine sehr stabile und sichere Positionierung der Rohre erzielt.

Der Erfindung liegt die Erkenntnis zugrunde, dass mit den erfindungsgemäßen Rohrhaltern und mit der erfindungsgemäßen Heiz- und/oder Kühlanordnung zunächst eine optimale Wärmeübertragung gewährleistet wird. Mit den erfindungsgemäßen Rohrhaltern können die Rohre funktionssicher gegenüber der Dämmschicht angehoben werden, so dass ein Rohr optimal radial im Estrich eingebunden werden kann. Dadurch wird der Wärmeübergang verbessert und die Heiz- und/oder Kühlleistung deutlich erhöht. Mit den erfindungsgemäßen Rohrhaltern ist im Vergleich zu den aus dem Stand der Technik bekannten Rohrhaltern auch ein exakteres und funktionssichereres Positionieren und Führen der Rohre möglich. Im Übrigen gewährleisten die zugleich als Abstützelemente auf der Dämmschicht funktionierenden Rohrauflageelemente der Rohrhalter, dass auch beim Auftreten auf ein montiertes Rohr die Position des Rohres in vorteilhafter Weise beibehalten werden kann bzw. im Wesentlichen beibehalten werden kann. Dagegen finden bei den aus dem Stand der Technik bekannten Rohrhaltern bei einem solchen Auftreten auf das Rohr unerwünschte Verschiebungen und Positionsänderungen des Rohres statt. Hervorzuheben ist weiterhin, dass von den erfindungsgemäßen Rohrhaltern auch Rohre unterschiedlichen Durchmessers ohne Beeinträchtigung der oben genannten Vorteile funktionssicher aufgenommen werden können. Dadurch wird das aufwendige Vorhalten einer Mehrzahl von unterschiedlichen Rohrhaltern und einer Mehrzahl von unterschiedlichen Setzvorrichtungen vermieden. Es ist fernerhin zu betonen, dass die erfindungsgemäßen Vorteile auch mit relativ einfachen und kostengünstigen Maßnahmen erreicht werden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht des erfindungsgemäßen Rohrhalters,
- Fig. 2: eine Frontansicht des Gegenstandes nach Fig. 1,
- Fig. 3: den Gegenstand gemäß Fig. 2 beim Aufbringen auf ein Rohr,
- Fig. 4: den Gegenstand nach Fig. 3 mit aufgenommenem Rohr und
- Fig. 5: einen vergrößerten Ausschnitt A aus der Fig. 2.

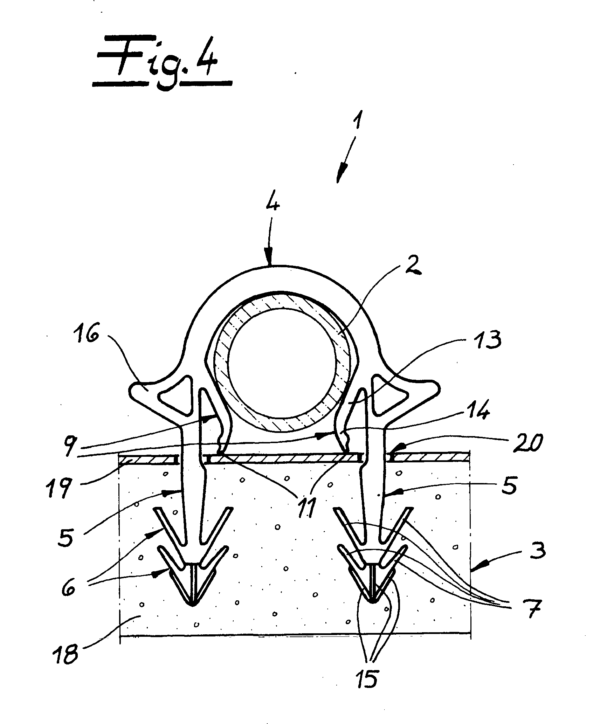

Die Figuren zeigen einen Rohrhalter 1 zur Befestigung eines Heizrohres und/oder Kühlrohres (nachfolgend kurz Rohr 2) auf einer Dämmschicht 3. Der Rohrhalter 1 ist U-förmig ausgebildet und weist eine U-Basis 4 sowie zwei daran angeschlossene U-Schenkel 5 auf. Die U-Basis 4 ist vorzugsweise und im Ausführungsbeispiel bogenförmig und insbesondere halbkreisförmig bzw. in etwa halbkreisförmig ausgebildet. An das Ende jedes U-Schenkels 5 sind bevorzugt und im Ausführungsbeispiel zwei Widerhaken 6 einstückig angeformt und jeder Widerhaken 6 weist zwei schräg zur Längsachse des zugeordneten U-Schenkels 5 angeordnet Widerhakenelemente 7 auf. Die Widerhakenelemente 7 sind dabei an gegenüberliegenden Seiten des U-Schenkels 5 vorgesehen. Die Widerhaken 6 dienen in an sich bekannter Weise der Verankerung des Rohrhalters 1 in der Dämmschicht 3 (siehe insbesondere Fig. 4).

An den Innenseiten 8 der U-Schenkel 5 ist jeweils ein Rohrauflageelement 9 angeschlossen. Die Rohrauflageelemente 9 dienen der Aufnahme bzw. Auflage eines Rohres 2 (Fig. 4). Das Rohr 2 liegt dabei im oberen Bereich der Rohrauflageelemente 9 auf den Rohrauflageelementen 9 auf. Wie der Fig. 4 entnehmbar ist, dienen diese Rohrauflageelemente 9 zugleich als Abstützelemente für die Abstützung des Rohrhalters 1 bzw. des Rohres 2 auf der Dämmschicht 3. Zweckmäßigerweise und im Ausführungsbeispiel stützen sich die Rohrauflageelemente 9 dabei jeweils mit einem an ihrem unteren Ende vorgesehenen Abstützfuß 11 unmittelbar auf der Dämmschicht 3 ab. Vorzugsweise und im Ausführungsbeispiel sind die Rohrauflageelemente 9 im Übrigen einstückig an die U-Schenkel 5 des Rohrhalters 1 angeformt.

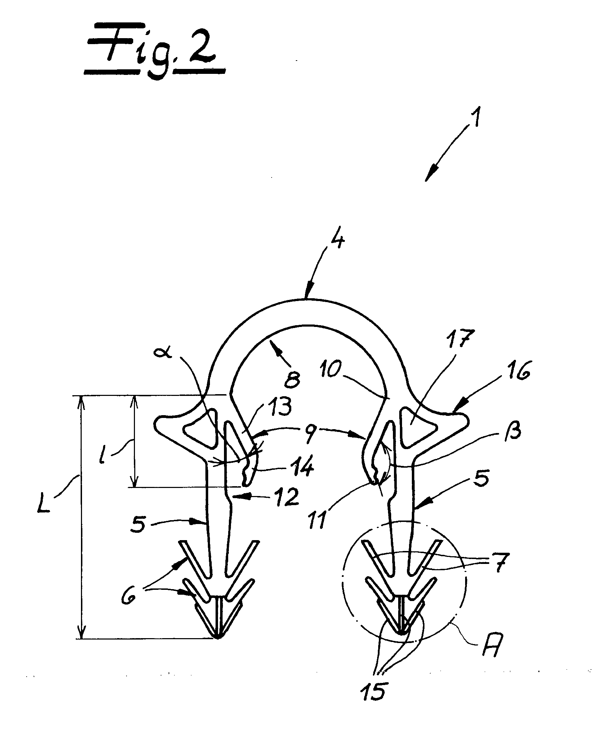

Bevorzugt und im Ausführungsbeispiel sind die Rohrauflageelemente 9 ausschließlich mit ihrem oberen Ende 10 jeweils an die Innenseite 8 des zugeordneten U-Schenkels 5 angeschlossen und sie ragen mit ihrem unteren Ende im noch nicht abgestützten Zustand (Fig. 2) frei in den Zwischenraum zwischen den U-Schenkeln 5. Im Ausführungsbeispiel sind die Rohrauflageelemente 9 unmittelbar unterhalb der bogenförmigen U-Basis 4 an die U-Schenkel 5 angeschlossen bzw. angeformt.

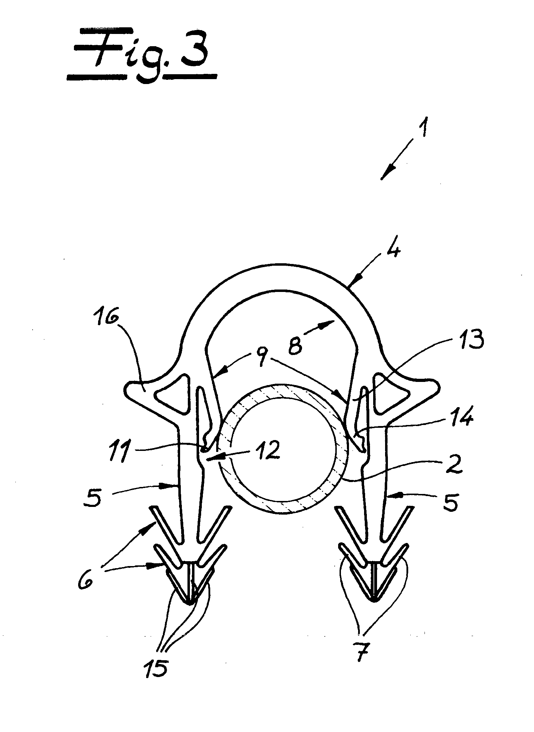

Insbesondere einer vergleichenden Betrachtung der Fig. 3 und 4 ist entnehmbar, dass die Rohrauflageelemente 9 als Rastelemente zum Einrasten bzw. Verrasten eines Rohres 2 zwischen der U-Basis 4 und den Rohrauflageelementen 9 (Fig. 4) ausgebildet sind. Beim Aufbringen eines erfindungsgemäßen Rohrhalters auf ein Rohr 2 passiert das Rohr 2 zunächst die Rohrauflageelemente 9, die aufgrund ihres gegenüber dem Außendurchmesser des Rohres 2 geringeren Abstandes voneinander zu den Innenseiten 8 der U-Schenkel 5 hingedrückt werden (Fig. 3). Dazu sind an den Innenseiten 8 der U-Schenkel 5 Ausweichausnehmungen 12 für die Rohrauflageelemente 9 vorgesehen. Nach dem Passieren des Rohres 2 gelangen die federbeweglichen Rohrauflageelemente 9 unter Einwirkung elastischer Rückstellkräfte in ihren Ausgangszustand (Fig. 4) zurück. Die Rohrauflageelemente 9 stützen sich dann im fixierten Zustand des Rohrhalters 1 bzw. des Rohres 2 auf der Dämmschicht 3 ab.

Den Figuren ist weiterhin entnehmbar, dass die Rohrauflageelemente 9 einen oberen Rohrauflageabschnitt 13 und einen dazu zur Innenseite der U-Schenkel 5 abgewinkelten Abstützabschnitt 14 aufweisen. Im fixierten Zustand liegt das Rohr 2 auf den Rohrauflageabschnitten 13 auf (Fig. 4) und die dazu jeweils abgewinkelten Abstützabschnitte 14 stützen sich mit den Abstützfüßen 11 auf der Dämmschicht 3 ab. Der Fig. 2 ist entnehmbar, dass der Winkel α zwischen einem Rohrauflageabschnitt 13 und dem zugeordneten U-Schenkel 5 ca. 35° beträgt. Außerdem beträgt der Winkel β zwischen dem Rohrauflageabschnitt 13 und dem daran angeschlossenen Abstützabschnitt 14 in etwa 125°.

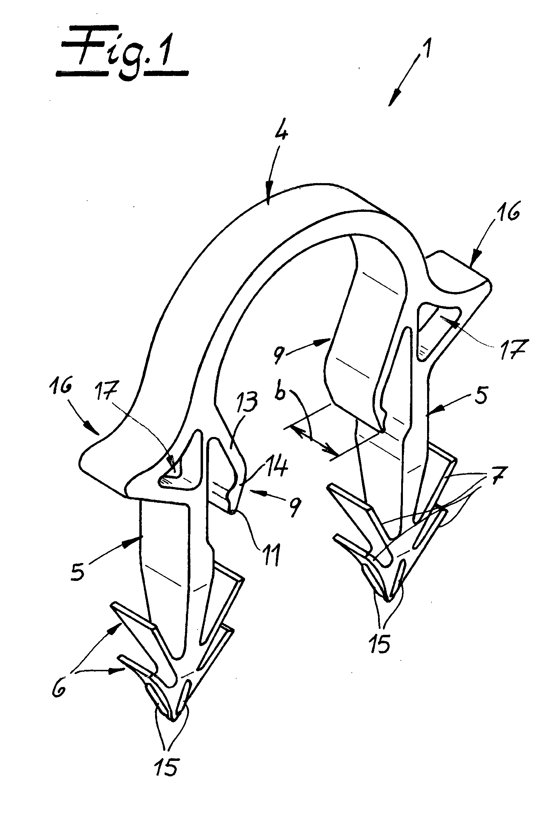

Der Fig. 1 ist entnehmbar, dass bevorzugt und im Ausführungsbeispiel die Breite b der Rohrauflageelemente 9 der Breite der U-Schenkel 5 im Bereich der Rohrauflageelemente 9 entspricht. In der Fig. 2 ist erkennbar, dass die Länge I der Projektion eines Rohrauflageelementes 9 auf die Innenseite 8 des zugeordneten U-Schenkels 5 zumindest 25 % der Länge L dieses U-Schenkels 5 beträgt.

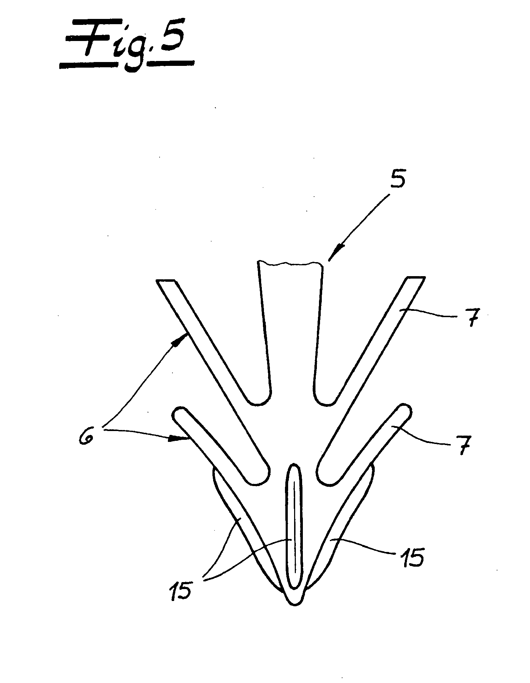

Einer vergleichenden Betrachtung der Fig. 2 und 5 ist entnehmbar, dass nach bevorzugter Ausführungsform und im Ausführungsbeispiel an den beiden unteren Widerhaken 6 jeweils zwei Schneidkanten 15 angeschlossen sind, die sich über den unteren Bereich der beiden Widerhakenelemente 7 jedes Widerhakens 6 erstrecken. Die Schneidkanten 15 stehen dabei aus der dämmschichtseitigen Außenfläche der Widerhakenelemente 7 vor. Sie sind vorzugsweise zentralmittig bezüglich dieser Außenfläche der Widerhakenelemente 7 angeordnet. Zweckmäßigerweise und im Ausführungsbeispiel ist auch an dem unteren Ende eines U-Schenkels 5 jeweils eine Schneidkante 15 an der Vorderseite des U-Schenkels 5 und an der Rückseite des U-Schenkels 5 angeschlossen. Die rückseitige Schneidkante 15 ist dabei in den Figuren nicht erkennbar. Die Schneidkanten 15 an den Widerhakenelementen 7 und an dem unteren Ende der U-Schenkel 5 dienen zum funktionssicheren Einschneiden des Rohrhalters 1 in die Dämmschicht 3. Die Schneidkanten sind bevorzugt wie auch der gesamte Rohrhalter 1 aus Kunststoff ausgeführt und zweckmäßigerweise einstückig an die Widerhakenelemente 7 angeformt.

Die erfindungsgemäßen Rohrhalter 1 werden zweckmäßigerweise - das Rohr 2 überfassend - mit einer in den Figuren nicht dargestellten Setzvorrichtung in die Dämmschicht 3 eingestoßen. Die Setzvorrichtung greift dabei an Manipulierelementen 16 des Rohrhalters 1 an, die außenseitig an den U-Schenkeln 5 angeformt sind. Zur Materialersparnis und zur besseren Wanddickenverteilung sind in diesen Manipulierelementen 16 Ausnehmungen 17 vorgesehen.

Die Dämmschicht 3 weist im Ausführungsbeispiel eine Unterschicht 18 sowie eine darauf angeordnete Auflageschicht 19 aus einem elastischen Vliesstoff auf. Beim Einstoßen eines Rohrhalters 1 in die Dämmschicht 3 schneiden die Schneidkanten 15 Einstichöffnungen 20 in die Auflageschicht 19 bzw. in den Vliesstoff ein und die Widerhaken 6 dringen dann in die Dämmschicht 3 bzw. in die Unterschicht 18 ein. Nach diesem Eindringen der Widerhaken 6 zieht sich die elastische Auflageschicht 19 aus dem Vliesstoff im Bereich der Einstichöffnungen 20 zusammen, so dass die eingeschnittenen Einstichöffnungen unter Einwirkung elastischer Rückstellkräfte teilweise wieder verschlossen werden. Im befestigten Zustand der Rohrhalter 1 hintergreifen die Widerhaken 6 bzw. die Widerhakenelemente 7 die Auflageschicht 19 der Dämmschicht 3.

## Patentansprüche

1. Rohrhalter (1) zur Befestigung eines Heizrohres und/oder Kühlrohres (2) auf einer Dämmschicht (3), wobei der Rohrhalter (1) U-förmig bzw. im Wesentlichen U-förmig ausgebildet ist und eine U-Basis (4) sowie zwei daran angeschlossene U-Schenkel (5) aufweist, wobei an jedem U-Schenkel (5) zumindest ein Widerhaken (6) für die Verankerung des Rohrhalters (1) in der Dämmschicht (3) angeschlossen ist, wobei an den U-Schenkeln (5) jeweils zumindest ein Rohrauflageelement (9) angeschlossen ist, wobei die Rohrauflageelemente (9) jeweils mit ihrem oberen Ende (10) an die Innenseite (8) der U-Schenkel (5) angeschlossen sind, wobei die Rohrauflageelemente (9) einstückig mit den U-Schenkeln (5) ausgebildet sind, wobei die Rohrauflageelemente (9) zur Auflage eines Rohres (2) zwischen den Rohrauflageelementen (9) und der U-Basis (4) vorgesehen sind, wobei die Rohrauflageelemente (9) einen Rohrauflageabschnitt (13) und einen dazu zur Innenseite des jeweils zugeordneten U-Schenkels (5) hin abgewinkelten Abstützabschnitt (14) aufweisen, wobei die Rohrauflageelemente (9) zugleich Abstützelemente für die Abstützung des Rohres (2) auf der Dämmschicht (3) sind, wobei die Rohrauflageelemente (9) im noch nicht abgestützten Zustand mit ihrem unteren Ende frei in den Zwischenraum zwischen den U-Schenkeln (5) ragen und wobei die Rohrauflageelemente (9) bzw. deren Abstützabschnitte (14) an ihren unteren Enden jeweils zumindest einen Abstützfuß (11) zur Abstützung auf der Dämmschicht (3) aufweisen.

2. Rohrhalter nach Anspruch 1, wobei die Rohrauflageelemente (9) als Rastelemente zum Einrasten bzw. Verrasten eines Heizrohres oder Kühlrohres zwischen U-Basis (4) und Rohrauflageelementen (9) ausgebildet sind.

3. Rohrhalter nach Anspruch 2, wobei die U-Schenkel (5) an ihren Innenseiten (8) Ausweichausnehmungen (12) für die Rastelemente beim Verrasten eines Rohres (2) aufweisen.

4. Rohrhalter nach einem der Ansprüche 1 bis 3, wobei die Länge I der Projektion eines Rohrauflageelementes (9) auf die Innenseite (8) des zugeordneten U-Schenkels (5) zumindest 25 %, vorzugsweise zumindest 30 % und bevorzugt zumindest 35 % der Länge L dieses U-Schenkels (5) beträgt.

5. Rohrhalter nach einem der Ansprüche 1 bis 4, wobei an einem an einen U-Schenkel (5) angeschlossenen Widerhaken (6) zumindest eine Schneidkante (15) angeordnet ist.

6. Rohrhalter nach einem der Ansprüche 1 bis 5, wobei an dem unteren Ende eines U-Schenkels (5) an der Vorderseite des U-Schenkels (5) und/oder an der Rückseite des U-Schenkels (5) zumindest eine Schneidkante (15) angeschlossen ist.

7. Rohrhalter nach einem der Ansprüche 1 bis 6, wobei der Rohrhalter (1) für die Aufnahme bzw. Auflage von Rohren (2) mit einem Außendurchmesser von 10 bis 25 mm, vorzugsweise mit einem Außendurchmesser von 14 bis 20 mm eingerichtet bzw. ausgelegt ist.

8. Heiz- und/oder Kühlanordnung mit einer Dämmschicht (3), zumindest einem auf der Dämmschicht (3) verlegten Rohr (2) und mit Rohrhaltern (1) nach einem der Ansprüche 1 bis 11, mit denen das Rohr (2) an der Dämmschicht (3) fixiert ist, wobei die Dämmschicht (3) zumindest eine Auflageschicht (19) aus einem elastischen Vliesstoff aufweist.

9. Heiz- und/oder Kühlanordnung nach Anspruch 8, wobei die Auflageschicht (19) aus dem Vliesstoff mit der Maßgabe elastisch ausgebildet ist, dass sich der Vliesstoff nach dem Eindringen der Widerhaken (6) der Rohrhalter (1) im Zuge der Befestigung des Rohres (2) im Bereich der mit den Widerhaken (6) erzeugten Einstichöffnungen (20) zusammenzieht, so dass die Einstichöffnungen (20) teilweise wieder verschlossen werden.

10. Heiz- und/oder Kühlanordnung nach einem der Ansprüche 8 oder 9, wobei der die Auflageschicht (19) bildende Vliesstoff mit einer Polymerschicht oder mit einer Lackschicht versiegelt ist.

## Claims

1. A tube holder (1) for fastening a heating tube and/or cooling tube (2) to an insulating layer (3), wherein the tube holder (1) is U-shaped or essentially U-shaped in design, and exhibits a U-base (4) along with U-legs (5) connected thereto, wherein each U-leg (5) is connected with at least one barbed hook (6) for anchoring the tube holder (1) in the insulating layer (3), wherein each U-leg is connected with at least one tube support element (9), wherein the upper end (10) of each tube support element (9) is connected to the interior side (8) of the U-legs (5), wherein the tube support elements (9) are designed as a single piece with the U-legs (5), wherein the tube support elements (9) are provided for supporting a tube (2) between the tube support elements (9) and the U-base (4), wherein the tube support elements (9) exhibit a tube support section (13) and a support section (14) angled toward the interior side of the respectively allocated U-leg (5), wherein the tube support elements (9) are simultaneously support elements for supporting the tube (2) on the insulating layer (3), wherein the tube support elements (9) freely extend with their lower end into the gap between the U-leg (5) when not yet in the supported state, and wherein the lower ends of the tube support elements (9) or their support sections (14) each exhibit at least one support foot (11) for providing support on the insulating layer (3).

2. The tube holder according to claim 1, wherein the tube support elements (9) are designed as snap-in elements for engaging or latching a heating tube or cooling tube between the U-base (4) and tube support elements (9).

3. The tube holder according to claim 2, wherein the interior sides (8) of the U-legs (5) exhibit alternative recesses (12) for the snap-in elements while latching a tube (2).

4. The tube holder according to one of claims 1 to 3, wherein the length l of the projection of a tube support element (9) on the interior side (8) of the allocated U-leg (5) measures at least 25%, particularly at least 30%, and preferably at least 35% of the length L of this U-leg (5).

5. The tube holder according to one of claims 1 to 4, wherein at least one cutting edge (15) is located on a barbed hook (6) connected with a U-leg (5).

6. The tube holder according to one of claims 1 to 5, wherein at least one cutting edge (15) is connected with the lower end of a U-leg (5) on the front side of the U-leg (5) and/or on the rear side of the U-leg (5).

7. The tube holder according to one of claims 1 to 6, wherein the tube holder (1) is set up or configured to accommodate or support tubes (2) with an outer diameter of 10 to 25 mm, preferably with an outer diameter of 14 to 20 mm.

8. A heating and/or cooling device with an insulating layer (3), at least one tube (2) installed on the insulating layer (3) and with tube holders (1) according to one of claims 1 to 11, with which the tube (2) is fixed on the insulating layer (3), wherein the insulating layer (3) exhibits at least one support layer (19) consisting of an elastic non-woven fabric.

9. The heating and/or cooling device according to claim 8, wherein the support layer (19) consisting of the non-woven fabric is given an elastic design such that, after the barbed hooks (6) of the tube holder (1) have penetrated, the non-woven fabric contracts as the tube (2) is being fastened in the area of the punctured openings (20) generated with the barbed hooks (6), so that the punctured openings (20) are again partially sealed.

10. The heating and/or cooling device according to one of claims 8 or 9, wherein the non-woven fabric comprising the support layer (19) is sealed with a polymer layer or lacquer layer.

## Revendications

1. Support de tuyaux (1) pour la fixation d'un tuyau de chauffage et/ou d'un tuyau de refroidissement (2) sur une couche d'isolation (3), dans lequel le support de tuyaux (1) est conçu en forme de U ou quasiment en forme de U et comporte une base de U (4) ainsi que deux branches de U (5) reliées à celle-ci, dans lequel au moins un barbillon (6) est relié à chaque branche de U (5) pour l'ancrage du support de tuyaux (1) dans la couche d'isolation (3), dans lequel au moins un élément d'appui de tuyau (9) est respectivement relié aux branches de U (5), dans lequel les éléments d'appui de tuyau (9) sont reliés respectivement avec leur extrémité supérieure (10) au côté intérieur (8) des branches de U (5), dans lequel les éléments d'appui de tuyau (9) sont conçus en une seule pièce avec les branches de U (5), dans lequel les éléments d'appui de tuyau (9) sont prévus pour l'appui d'un tuyau (2) entre les éléments d'appui de tuyau (9) et la base de U (4), dans lequel les éléments d'appui de tuyau (9) présentent une section d'appui de tuyau (13) et une section de support (14) coudée vers le côté intérieur de chaque branche de U (5) correspondante, dans lequel les éléments d'appui de tuyau (9) sont également des éléments de support pour le support du tuyau (2) sur la couche d'isolation (3), dans lequel les éléments d'appui de tuyau (9) font saillie librement avec leur extrémité inférieure dans l'espace intermédiaire entre les branches de U (5) dans l'état pas encore supporté, et dans lequel les éléments d'appui de tuyau (9) ou leurs sections de support (14) comportent respectivement au moins un pied de support (11) à leurs extrémités inférieures, pour le support sur la couche d'isolation (3).

2. Support de tuyaux selon la revendication 1, dans lequel les éléments d'appui de tuyau (9) sont conçus comme des éléments d'encliquetage pour l'encliquetage ou l'enclenchement d'un tuyau de chauffage ou d'un tuyau de refroidissement entre la base de U (4) et les éléments d'appui de tuyau (9).

3. Support de tuyaux selon la revendication 2, dans lequel les branches de U (5) comportent des évidements d'évitements (12) sur leurs côtés intérieurs (8), pour les éléments d'encliquetage lors de l'enclenchement d'un tuyau (2).

4. Support de tuyaux selon l'une des revendications 1 à 3, dans lequel la longueur l de la projection d'un élément d'appui de tuyau (9) sur le côté intérieur (8) de la branche de U (5) correspondante mesure au moins 25%, de préférence au moins 30% et mieux, au moins 35% de la longueur L de cette branche de U (5).

5. Support de tuyaux selon l'une des revendications 1 à 4, dans lequel au moins une arête tranchante (15) est agencée sur un barbillon (6) relié à une branche de U (5).

6. Support de tuyaux selon l'une des revendications 1 à 5, dans lequel au moins une arête tranchante (15) est reliée à l'extrémité inférieure d'une branche de U (5), du côté avant de la branche de U (5) et/ou du côté arrière de la branche de U (5).

7. Support de tuyaux selon l'une des revendications 1 à 6, dans lequel le support de tuyaux (1) est équipé ou conçu pour l'admission ou l'appui de tuyaux (2) avec un diamètre extérieur de 10 à 25 mm, de préférence avec un diamètre extérieur de 14 à 20 mm.

8. Système de chauffage et/ou de refroidissement avec une couche d'isolation (3), au moins un tuyau (2) posé sur la couche d'isolation (3), et avec des supports de tuyaux (1) selon l'une des revendications 1 à 11, avec lesquels le tuyau (2) est fixé à la couche d'isolation (3), dans lequel la couche d'isolation (3) comporte au moins une couche d'appui (19) constituée d'une toile de non-tissé élastique.

9. Système de chauffage et/ou de refroidissement selon la revendication 8, dans lequel la couche d'appui (19) constituée d'une toile de non-tissé est conçue élastique dans la mesure où la toile de non-tissé se rétracte, après l'insertion des barbillons (6) des supports de tuyaux (1), pendant la fixation d'un tuyau (2) dans la région des ouvertures d'insertion (20) produites par les barbillons (6), de manière à refermer partiellement les ouvertures d'insertion (20).

10. Système de chauffage et/ou de refroidissement selon l'une des revendications 8 ou 9, dans lequel la toile de non-tissé formant la couche d'appui (19) est scellée avec une couche polymère ou avec une couche de vernis.
